# EUROPEAN PATENT APPLICATION

(11) **EP 4 552 890 A2**
(43) Date of publication of application: **14.05.2025**
(21) Application number: 24210372.9
(22) Date of filing: 01.11.2024
(51) Int. Cl.: B60K 15/05

(54) **ACTUATOR FOR REFUELING OR CHARGING PORT COVER AND SYSTEM COMPRISING ACTUATOR**

(30) Priority: 08.11.2023 CN 202311480282
(71) Applicant: Illinois Tool Works Inc., Glenview IL 60025 (US)
(72) Inventor: WANG, Jingyu, Glenview, 60025 (US)
(74) Representative: HGF

(57) **Abstract**

The present disclosure provides an actuator for a refueling or charging port cover, the actuator including a housing, a lifting shaft, a guiding protrusion, and a limiting protrusion. The lifting shaft is at least partially arranged in the cavity of the housing and can ascend and descend relative to the housing. The lifting shaft includes a guiding section, on which a guiding groove and a limiting groove are provided. The guiding groove has a distal portion corresponding to the end of the ascending stroke of the lifting shaft. The guiding protrusion is provided on the housing and cooperates with the guiding groove. The limiting protrusion is provided on the housing. When the guiding protrusion moves to the distal portion in the guiding groove, the limiting protrusion at least partially enters the limiting groove. The guiding groove is provided with a limiting surface for first rotation direction at the distal portion, and the limiting groove includes a additional limiting surface for first rotation direction and a limiting surface for second rotation direction. When the guiding protrusion moves to the distal portion, at least one of the limiting surface for first rotation direction and the additional limiting surface for first rotation direction, together with the limiting surface for second rotation direction, limits the rotation of the lifting shaft relative to the housing.

## Description

### TECHNICAL FIELD

The present disclosure relates to an actuator, and in particular to an actuator for a refueling or charging port cover of an automobile.

### BACKGROUND

A refueling or charging port cover of an automobile can close a refueling or charging port after a refueling or charging operation is completed, and can open the refueling or charging port when a refueling or charging operation is required. There is a refueling or charging port cover, which, when in an open position, is raised by a lifting shaft to move away from the refueling or charging port. An ascending and descending operation of this type of refueling or charging port cover is generally controlled by an actuator.

For this type of refueling or charging port cover, the refueling or charging port cover is unavoidably touched by the operator as it is in an operating area where the operator performs the refueling or charging operation.

### SUMMARY OF THE DISCLOSURE

According to a first aspect of the present disclosure, the present disclosure provides an actuator for a refueling or charging port cover, the actuator including a housing, a lifting shaft, a guiding protrusion, and a limiting protrusion. The housing defines a cavity. The lifting shaft is at least partially arranged in the cavity and configured to ascend and descend relative to the housing to open and close the refueling or charging port cover. The lifting shaft includes a guiding section, the guiding section being provided with a guiding groove and a limiting groove. The guiding groove has a distal portion corresponding to the end of the ascending stroke of the lifting shaft. The guiding protrusion is provided on the housing and configured to cooperate with the guiding groove to guide the lifting shaft to move linearly along an axis or move helically around the axis, these movements are driven by a driving device. When the lifting shaft moves helically along a first rotation direction, the lifting shaft descends. When the lifting shaft moves helically in a second rotation direction opposite to the first rotation direction, the lifting shaft ascends. The limiting protrusion is provided on the housing, wherein when the guiding protrusion moves to the distal portion in the guiding groove, the limiting protrusion at least partially enters the limiting groove. The guiding groove is provided with a limiting surface for first rotation direction at the distal portion, and the limiting groove includes an additional limiting surface for first rotation direction and a limiting surface for second rotation direction. When the guiding protrusion moves to the distal portion in the guiding groove, at least one of the limiting surface for first rotation direction and the additional limiting surface for first rotation direction, together with the limiting surface for second rotation direction, limits the rotation of the lifting shaft relative to the housing.

In the actuator according to the first aspect described above, when the guiding protrusion moves to the distal portion in the guiding groove: the limiting surface for first rotation direction contacts the guiding protrusion, and the limiting surface for second rotation direction contacts the limiting protrusion; or the additional limiting surface for first rotation direction and the limiting surface for second rotation direction contact the limiting protrusion; or the limiting surface for first rotation direction contacts the guiding protrusion, and the additional limiting surface for first rotation direction and the limiting surface for second rotation direction contact the limiting protrusion.

In the actuator according to the first aspect described above, the guiding section is also provided with a clearance area, which is communicated with the limiting groove and can receive the limiting protrusion to allow the limiting protrusion to enter the limiting groove as the lifting shaft ascends.

In the actuator according to the first aspect described above, the guiding groove includes a straight groove extending along the axial direction and a helical groove extending around the axial direction. The straight groove is communicated with the helical groove. The helical groove forms the distal portion.

In the actuator according to the first aspect described above, the helical groove includes a first helical groove wall and a second helical groove wall facing each other, the first helical groove wall being upstream of the second helical groove wall in the first rotation direction, and the first helical groove wall including a guiding wall section and the limiting surface for first rotation direction.

In the actuator according to the first aspect described above, the limiting surface for first rotation direction, the additional limiting surface for first rotation direction, and the limiting surface for second rotation direction generally extend axially; or the limiting surface for first rotation direction, the additional limiting surface for first rotation direction, and the limiting surface for second rotation direction extend at an inclination angle smaller than that of the guiding wall section, and the inclination angle of the limiting surface for second rotation direction is different from the inclination angle of the limiting surface for first rotation direction and the inclination angle of the additional limiting surface for first rotation direction.

In the actuator according to the first aspect described above, the clearance area includes an upstream boundary and a downstream boundary facing each other, the upstream boundary being upstream of the downstream boundary in the first rotation direction, wherein the downstream boundary extends continuously with the second rotation direction limiting surface along the axial direction or at the same inclination angle.

In the actuator according to the first aspect described above, the guiding protrusion and the limiting protrusion are spaced apart by a distance in the axial direction and are spaced apart by a distance in the circumferential direction.

In the actuator according to the first aspect described above, the housing includes an outer housing portion and an inner sleeve. The inner sleeve is detachably mounted within the outer housing portion and immovable with respect to the outer housing portion, the inner sleeve defining a portion of the cavity. The guiding protrusion and the limiting protrusion are provided on the inner sleeve.

In the actuator according to the first aspect described above, the lifting shaft further includes a transmission section, the transmission section being configured to helically engage with the driving device extending into the cavity to drive the lifting shaft to ascend and descend. The distal portion of the guiding groove is configured to be remote from the transmission section.

In the actuator according to the first aspect described above, the guiding section is integrally molded from a plastic material over the transmission section.

According to a second aspect of the present disclosure, the present disclosure provides an actuator for a refueling or charging port cover, the actuator including a housing, a lifting shaft, and a guiding protrusion. The housing defines a cavity. The lifting shaft is at least partially arranged in the cavity and configured to ascend and descend relative to the housing to open and close the refueling or charging port cover. The lifting shaft includes a guiding section, the guiding section being provided with at least one guiding groove. The at least one guiding groove has a distal portion corresponding to the end of the ascending stroke of the lifting shaft. The guiding protrusion is provided on the housing and configured to cooperate with the guiding groove to guide the lifting shaft to move linearly along an axis or move helically around the axis, these movement are driven by a driving device. When the lifting shaft moves helically along a first rotation direction, the lifting shaft descends. When the lifting shaft moves helically in a second rotation direction opposite to the first rotation direction, the lifting shaft ascends. The distal portion of the at least one guiding groove forms a limiting groove, wherein when the guiding protrusion moves into the limiting groove, the limiting groove limits the rotation of the lifting shaft relative to the housing.

In the actuator according to the second aspect described above, the limiting groove includes a limiting surface for first rotation direction and a limiting surface for second rotation direction. When the guiding protrusion moves into the limiting groove, the limiting surface for first rotation direction and the limiting surface for second rotation direction contact the guiding protrusion.

In the actuator according to the second aspect described above, the limiting surface for first rotation direction and the limiting surface for second rotation direction extend axially, or extend toward each other gradually in the descending direction of the lifting shaft.

In the actuator according to the second aspect described above, the housing includes an outer housing and an inner sleeve. The inner sleeve is detachably mounted within the outer housing and immovable with respect to the outer housing, the inner sleeve defining a portion of the cavity. The guiding protrusion is provided on the inner sleeve.

In the actuator according to the second aspect described above, the lifting shaft further includes a transmission section, the transmission section being configured to helically engage with the driving device extending into the cavity to drive the lifting shaft to ascend and descend. The distal portion of the at least one guiding groove is configured to be remote from the transmission section.

In the actuator according to the second aspect described above, the at least one guiding groove includes three guiding grooves uniformly arranged along the circumferential direction.

According to a third aspect of the present disclosure, the present disclosure provides a refueling or charging port cover system for vehicles, the refueling or charging port cover system including a refueling or charging port cover, and the actuator according to the first or second aspect described above. The refueling or charging port cover is connected to the lifting shaft of the actuator and is opened and closed by ascending and descending of the lifting shaft relative to the housing.

### BRIEF DESCRIPTION OF THE DRAWINGS

FIG. 1A is a view showing a first state of a refueling or charging port cover system using an actuator according to the present disclosure;
FIG. 1B is a view showing a second state of the refueling or charging port cover system using the actuator according to the present disclosure;
FIG. 2A is a perspective view of an actuator according to an embodiment of the present disclosure;
FIG. 2B is a perspective view of the actuator shown in FIG. 2A with a housing removed;
FIG. 2C is an exploded view of the actuator shown in FIG. 2A;
FIG. 3A is an exploded view of the housing of the actuator shown in FIG. 2A;
FIG. 3B is a perspective view of an outer housing portion of the housing shown in FIG. 3A as viewed from top to bottom;
FIG. 3C is an axial cross-sectional view of the housing shown in FIG. 3A;
FIG. 4A is a perspective view of a guiding section of a lifting shaft of the actuator shown in FIG. 2A as viewed from a first perspective;
FIG. 4B is a perspective view of the guiding section of the lifting shaft of the actuator shown in FIG. 2A as viewed from a second perspective;
FIG. 4C is a perspective view of the guiding section of the lifting shaft of the actuator shown in FIG. 2A as viewed from a third perspective;
FIG. 5A is a perspective view of the actuator shown in FIG. 2A with a refueling or charging port cover fully closed, where the housing is not shown, but a guiding protrusion and a limiting protrusion provided on the housing are shown;
FIG. 5B is a perspective view of the actuator shown in FIG. 2A with the guiding protrusion in a straight groove of a guiding groove during opening or closing of the refueling or charging port cover, where the housing is not shown, but the guiding protrusion and the limiting protrusion provided on the housing are shown;
FIG. 5C-1 is a perspective view of the actuator shown in FIG. 2A as viewed from a first perspective with the guiding protrusion in a helical groove of the guiding groove during opening or closing of the refueling or charging port cover, where the housing is not shown, but the guiding protrusion and the limiting protrusion provided on the housing are shown;

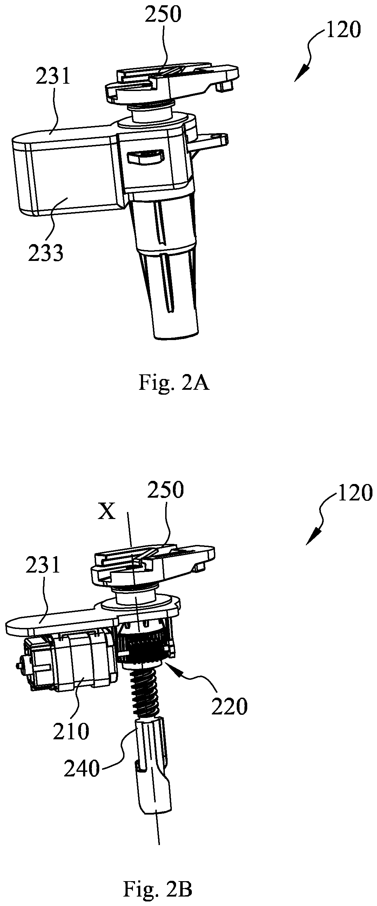

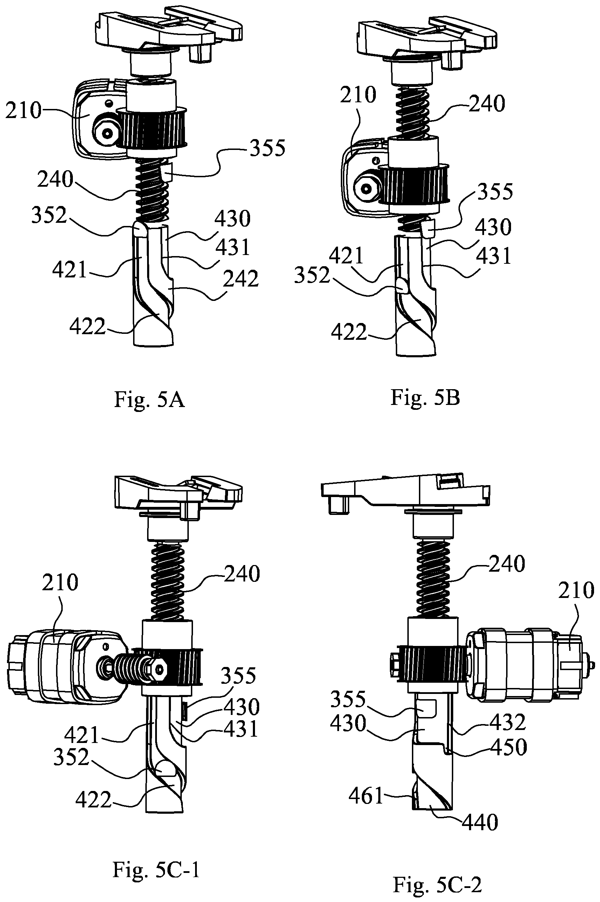

FIG. 5C-2 is a perspective view of the actuator shown in FIG. 2A as viewed from a second perspective with the guiding protrusion in the helical groove of the guiding groove during opening or closing of the refueling or charging port cover, where the housing is not shown, but the guiding protrusion and the limiting protrusion provided on the housing are shown;

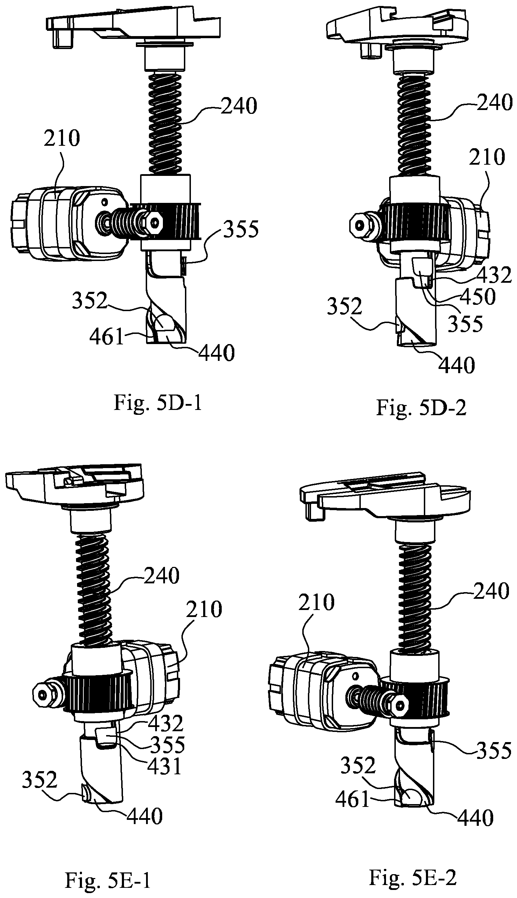

FIG. 5D-1 is a perspective view of the actuator shown in FIG. 2A as viewed from a first perspective with the limiting protrusion at an inlet of a limiting groove during opening or closing of the refueling or charging port cover, where the housing is not shown, but the guiding protrusion and the limiting protrusion provided on the housing are shown;
FIG. 5D-2 is a perspective view of the actuator shown in FIG. 2A as viewed from a second perspective with the limiting protrusion at the inlet of a limiting groove during opening or closing of the refueling or charging port cover, where the housing is not shown, but the guiding protrusion and the limiting protrusion provided on the housing are shown;
FIG. 5E-1 is a perspective view of the actuator shown in FIG. 2A as viewed from a first perspective with the refueling or charging port cover in a fully open position, where the housing is not shown, but the guiding protrusion and the limiting protrusion provided on the housing are shown;
FIG. 5E-2 is a perspective view of the actuator shown in FIG. 2A as viewed from a second perspective with the refueling or charging port cover in the fully open position, where the housing is not shown, but the guiding protrusion and the limiting protrusion provided on the housing are shown;

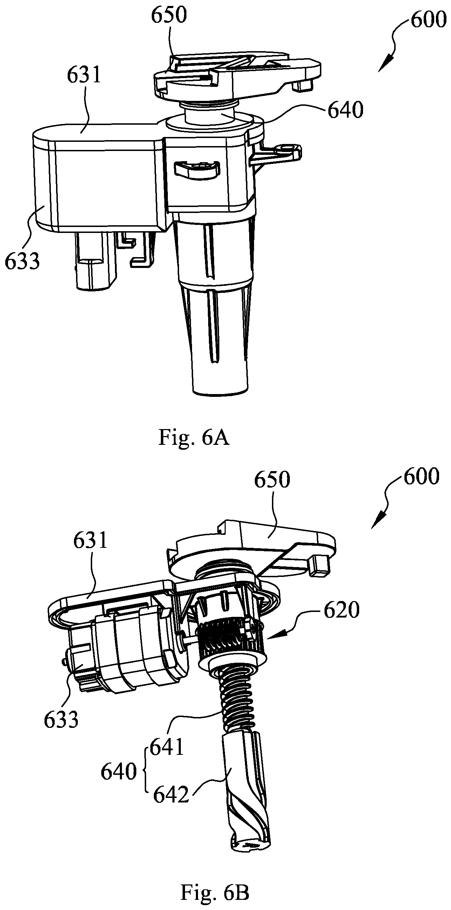

FIG. 6A is a perspective view of an actuator according to another embodiment of the present disclosure;
FIG. 6B is a perspective view of the actuator shown in FIG. 6A with a housing removed;

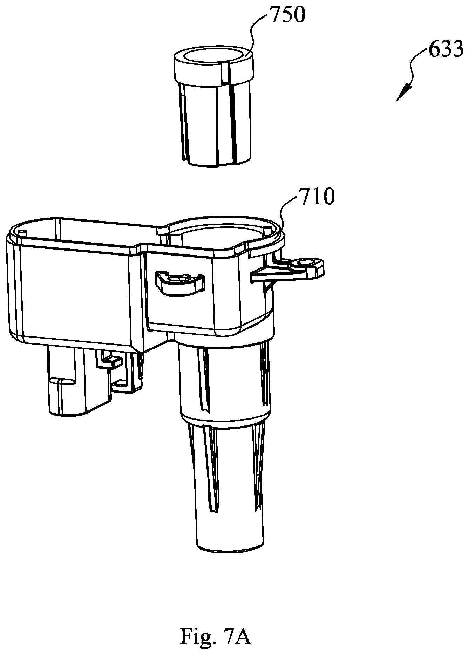

FIG. 7A is an exploded view of the housing of the actuator shown in FIG. 6A;

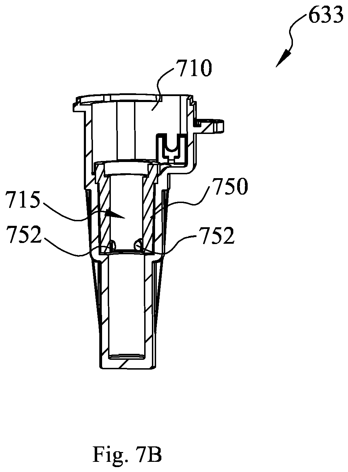

FIG. 7B is an axial cross-sectional view of the housing shown in FIG. 7A;

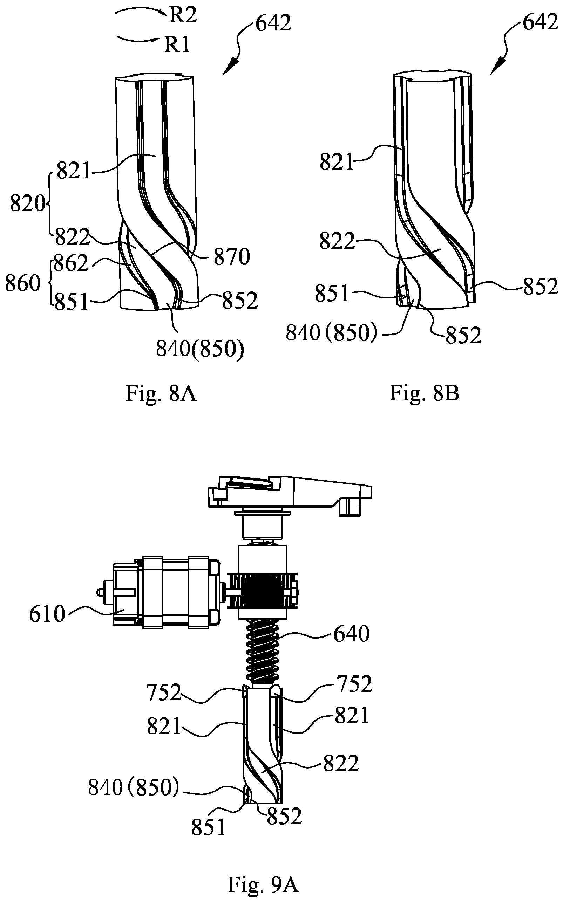

FIG. 8A is a perspective view of a guiding section of a lifting shaft of the actuator shown in FIG. 6A as viewed from a first perspective;
FIG. 8B is a perspective view of the guiding section of the lifting shaft of the actuator shown in FIG. 6A as viewed from a second perspective;
FIG. 9A is a perspective view of the actuator shown in FIG. 6A with a refueling or charging port cover fully closed, where the housing is not shown, but a guiding protrusion provided on the housing is shown;

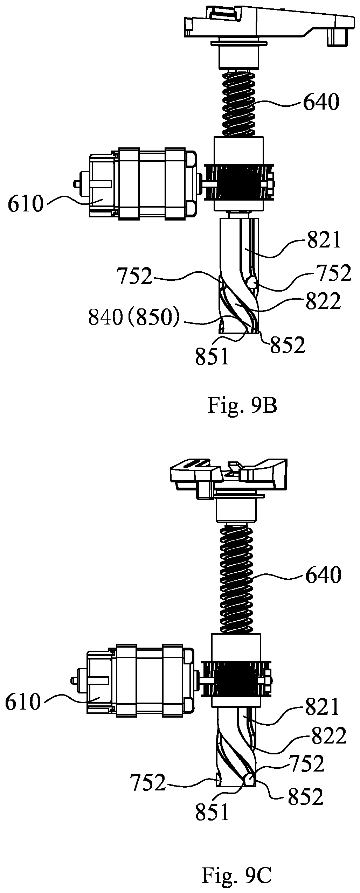

FIG. 9B is a perspective view of the actuator shown in FIG. 6A during opening or closing of the refueling or charging port cover, where the housing is not shown, but the guiding protrusion provided on the housing is shown; and
FIG. 9C is a perspective view of the actuator shown in FIG. 6A with the refueling or charging port cover in a fully open position, where the housing is not shown, but the guiding protrusion provided on the housing is shown.

### DETAILED DESCRIPTION OF EMBODIMENTS

Various specific implementations of the present disclosure are described below with reference to the drawings which constitute part of this specification. It should be understood that although the terms such as "front", "rear", "upper", "lower", "left" and "right" indicating directions are used in the present disclosure to describe various exemplary structural parts and elements of the present disclosure, these terms are used herein only for ease of description and are determined based on the exemplary orientations shown in the drawings. Since the arrangements in the embodiments disclosed in the present disclosure may be in various directions, these terms indicating directions are only illustrative and should not be considered as limitations.

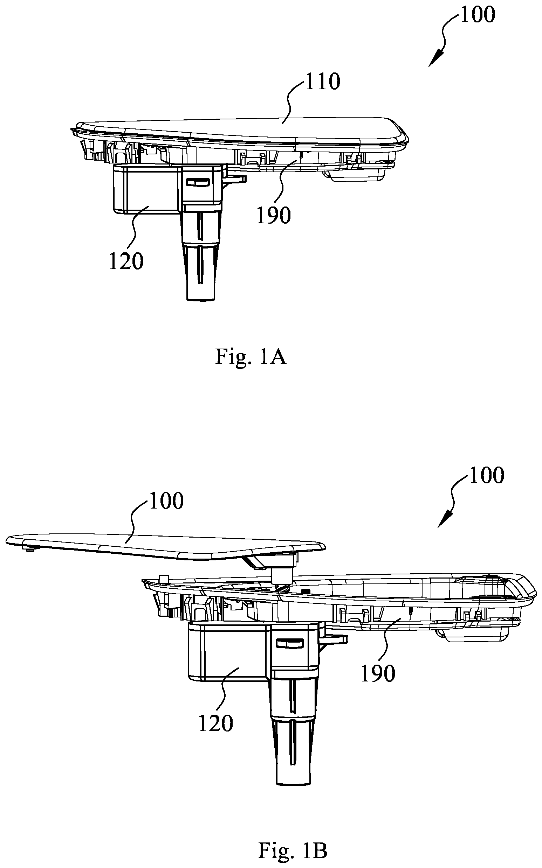

FIGS. 1A and 1B show two different states of use of a refueling or charging port cover system 100 using an actuator according to the present disclosure. FIG. 1A shows a refueling or charging port cover of the refueling or charging port cover system 100 in a closed state, and FIG. 1B shows the refueling or charging port cover of the refueling or charging port cover system 100 in a fully open state.

As shown in FIGS. 1A and 1B, the refueling or charging port cover system 100 includes a base 190, a refueling or charging port cover 110, and an actuator 120. The refueling or charging port cover system 100 is mounted on a vehicle body, and the base 190 is provided with a refueling or charging port (not shown). The refueling or charging port is connected to a fuel tank or a charging apparatus in a vehicle, and an operator can perform a refueling or charging operation on the vehicle by means of the refueling or charging port. The refueling or charging port cover 110 can cover the base 190 to close the refueling or charging port (see FIG. 1A), or move away from the base 190 to open the refueling or charging port (see FIG. 1B). From the closed position to an open position, the refueling or charging port cover 110 first ascends linearly, and then ascends helically to rotate away from the position directly above the refueling or charging port. Conversely, From the open position to the closed position, the refueling or charging port cover 110 first descends helically to rotate to the position directly above the refueling or charging port, and then descends linearly to precisely cover the base 190. The movement of the refueling or charging port cover 110 between the open position and the closed position is effected by the actuator 120.

FIGS. 2A to 5E-2 show an embodiment of the actuator of the present disclosure, and FIGS. 6A to 9C show another embodiment of the actuator of the present disclosure.

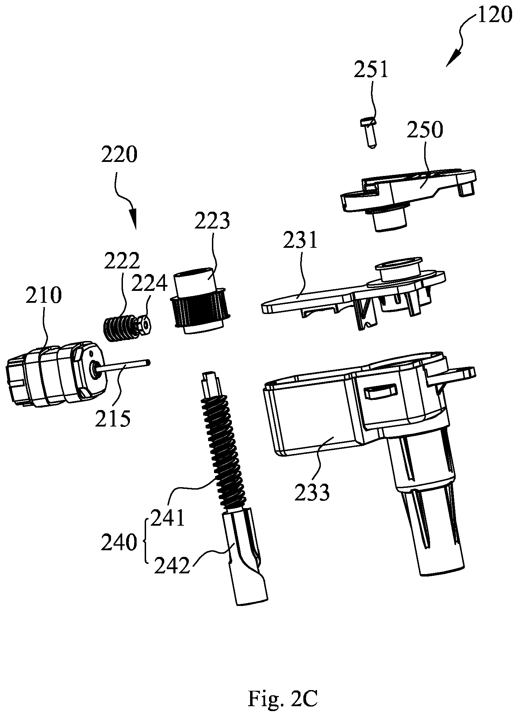

FIGS. 2A-2C show the overall structure of the actuator 120 according to an embodiment of the present disclosure. FIG. 2A is a perspective view of the actuator 120, FIG. 2B is a perspective view of the actuator 120 with a housing removed, and FIG. 2C is an exploded view of the actuator 120. As shown in FIGS. 2A-2C, the actuator 120 includes a driving device 210, a transmission device 220, a lifting shaft 240, and a housing 233 for accommodating the driving device 210, the transmission device 220 and the lifting shaft 240. The housing 233 is closed by a cover 231, and the top end of the lifting shaft 240 extends through the cover 231 out of the housing 233. At the top end of the lifting shaft 240, a support 250 for connecting the refueling or charging port cover 110 to the lifting shaft 240 is provided. The support 250 is connected to the top end of the lifting shaft 240 via a screw 251.

As shown in FIG. 2C, the lifting shaft 240 includes a transmission section 241 and a guiding section 242. The transmission section 241 and the guiding section 242 are connected to each other and arranged in the direction of the axis X (in the axial direction) of the lifting shaft 240. In the figures, the transmission section 241 is located above the guiding section 242. The transmission section 241 is provided with external helical teeth for engaging with the transmission device 220 such that the lifting shaft 240 can be driven to move by the driving device 210. In the embodiment shown in FIG. 2C, the transmission section 241 is made of a metal material, and the guiding section 242 is integrally molded from a plastic material over the transmission section 241.

The guiding section 242 is configured to cooperate with the housing 233 to guide the lifting shaft 240 to move linearly along the axis or move helically around the axis relative to the housing 233, these movements are driven by the driving device 210. That is, the lifting shaft 240 can ascend and descend linearly, or can ascend and descend helically. When the lifting shaft 240 moves linearly along the axis (ascends and descends linearly) relative to the housing 233, the lifting shaft 240 drives the refueling or charging port cover 110 to ascend or descend linearly. When the lifting shaft 240 moves helically around the axis (ascends and descends helically) relative to the housing 233, the lifting shaft 240 can drive the refueling or charging port cover 110 to ascend or descend helically, i.e., to rotate while ascending or descending linearly.

The driving device 210 is for example a drive motor, which includes a driving shaft 215. The transmission device 220 includes a worm 222 and a worm gear 223. The worm 222 is sleeved on the driving shaft 215 and is fixedly connected to the driving shaft 215 via a fastener 224, so that the worm 222 can rotate with the driving shaft 215. The worm gear 223 is sleeve-shaped and has helical teeth on both its outer circumference and inner circumference. The worm gear 223 is sleeved on the transmission section 241 of the lifting shaft 240, the helical teeth on the inner surface of the worm gear are engaged with the transmission section 241, and the helical teeth on the outer circumference of the worm gear are engaged with the worm 222. In this way, the driving device 210 can drive the lifting shaft 240 to move by means of the transmission device 220 composed of the worm 222 and the worm gear 223.

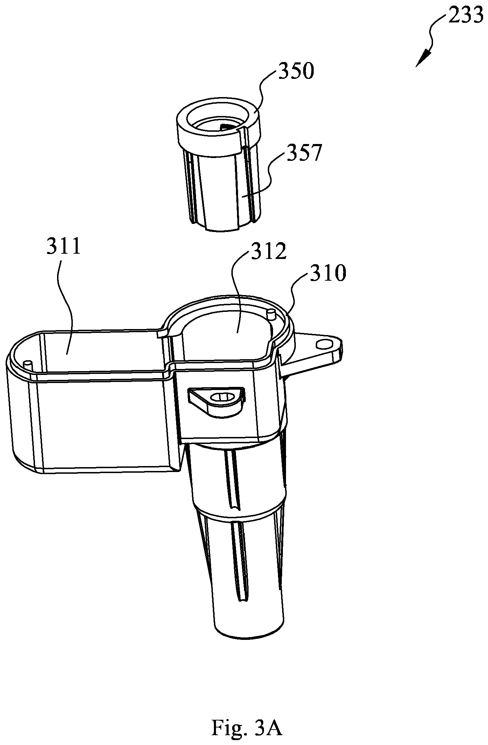

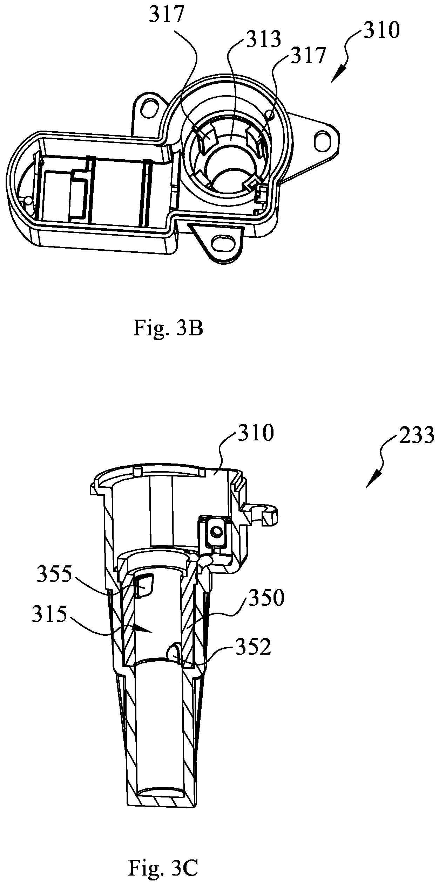

FIGS. 3A-3C show the specific structure of the housing 233. FIG. 3A is an exploded view of the housing 233, FIG. 3B is a perspective view of an outer housing portion of the housing 233 as viewed from top to bottom, and FIG. 3C is an axial cross-sectional view of the housing 233.

As shown in FIGS. 3A-3B, the housing 233 includes an outer housing portion 310 and an inner sleeve 350. The outer housing portion 310 includes two accommodating ing spaces, namely, a first accommodating space 311 and a second accommodating space 312, which are communicated with each other. The driving device 210 is received in the first accommodating space 311, the lifting shaft 240 is received in the second accommodating space 213, and the transmission device 220 is arranged in the two accommodating spaces. The inner sleeve 350 is removably mounted in the second receiving space 312 of the outer housing portion 310. To this end, an outer surface of the inner sleeve 350 is provided with a plurality of receiving grooves 357 (see FIG. 3A) extending in the axial direction of the lifting shaft 240, and an inner wall of the outer housing portion 310 is provided with a plurality of ribs 317 (see FIG. 3B) extending in the axial direction of the lifting shaft 240. The receiving grooves 357 cooperate with the ribs 317, to limit the rotation of the inner sleeve 350 relative to the outer housing portion 310. In addition, the inner wall of the outer housing portion 310 is further provided with a stepped portion 313 for limiting the downward movement of the inner sleeve 350 relative to the outer housing portion 310 along the axial direction of the lifting shaft 240. The cover 231 limits the upward movement of the inner sleeve 350 relative to the outer housing portion 310 along the axial direction of the lifting shaft 240. In this way, the inner sleeve 350 is held within the outer housing portion 310 and remains stationary relative to the outer housing portion 310.

As shown in FIG. 3C, the housing 233 defines a cavity 315 in the second accommodating space 312, and the lifting shaft 240 is at least partially arranged in the cavity 315. A portion of the cavity 315 is defined by the inner sleeve 350 and the other portion by the outer housing portion 310. An inner surface of the inner sleeve 350 is provided with a guiding protrusion 352 and a limiting protrusion 355. The guiding protrusion 352 and the limiting protrusion 355 protrude from the inner surface of the inner sleeve 350 and extend into the cavity 315. In the embodiment shown in the figures, the guiding protrusion 352 and the limiting protrusion 355 are spaced apart by a distance in the axial direction, the guiding protrusion 352 is arranged at the top of the inner sleeve 350, and the limiting protrusion 355 is arranged at the bottom of the inner sleeve 350. In addition, the guiding protrusion 352 and the limiting protrusion 355 are also spaced apart by a distance in the circumferential direction. The guiding protrusion 352 has a generally circular outer contour, while the limiting protrusion 355 has a generally square outer contour.

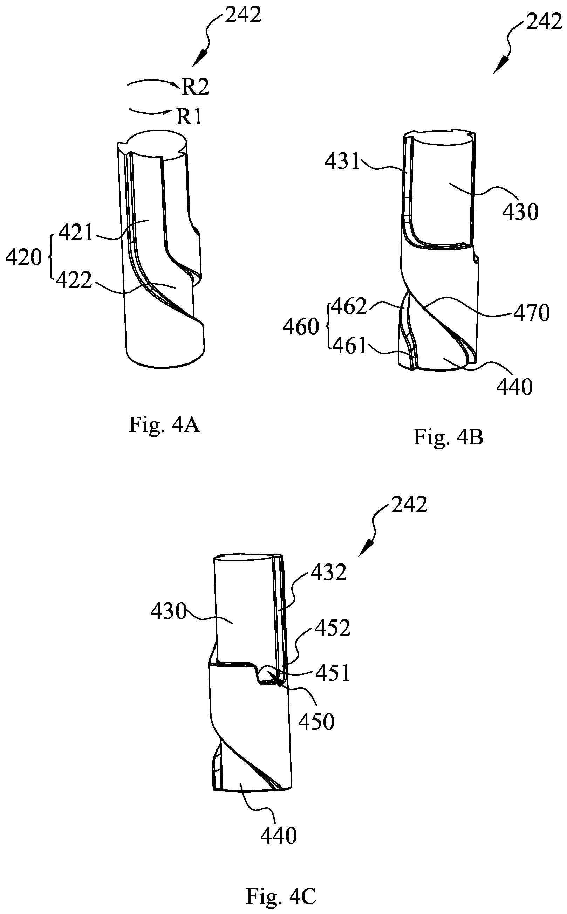

FIGS. 4A-4C respectively show the specific structure of the guiding section 242 of the lifting shaft 240 as viewed from three different perspectives around the lifting shaft 240. As shown in FIGS. 4A-4C, the guiding section 242 is generally cylindrical and has a guiding groove 420 on its outer surface. The guiding groove 420 is configured to cooperate with the guiding protrusion 352 on the housing 233 to guide the lifting shaft 240 to move linearly or helically, these movements are driven by the driving device 210, so as to guide the refueling or charging port cover 110 to ascend and descend, or to rotate while ascending and descending. The guiding groove 420 includes a straight groove 421 extending along the axial direction of the lifting shaft 240, and a helical groove 422 extending around the axis of the lifting shaft 240. The straight groove 421 is located at an upper portion of the guiding groove 420, and the helical groove 422 is located at a lower portion of the guiding groove 420. The straight groove is communicated with the helical groove. The guiding protrusion 352 on the housing 233 can be inserted into the guiding groove 420, and slide or move along the guiding groove 420. The width of the guiding groove 420 is set to be larger than the maximum width of the guiding protrusion 352 on the housing 233, so that there is a gap between the guiding protrusion 352 and a wall of the guiding groove 420, so as to reduce the resistance or interference that the guiding protrusion 352 is subjected to when sliding or moving in the guiding groove 420.

When the guiding protrusion 352 of the housing 233 moves in the straight groove 421 of the guiding groove 420, although the lifting shaft 240 has a tendency of rotational movement under the effect of the intermeshing of its transmission section 241 with the worm gear 223, the lifting shaft 240 can only move linearly (ascend and descend linearly) relative to the housing 233 in the axial direction, because the housing 233 is immobilized and the guiding protrusion 352 on the housing 233 cooperates with the straight groove 421 on the lifting shaft 240. When the guiding protrusion 352 of the housing 233 moves in the helical groove 422 of the guiding groove 420, the lifting shaft 240 moves helically (ascends and descends helically) relative to the housing 233, and the helical groove 422 defines a trajectory of the helical movement of the lifting shaft 240. When the lifting shaft 240 moves helically in a first rotation direction R1 shown in the figures, the lifting shaft 240 descends helically, and when the lifting shaft 240 moves helically in a second rotation direction R2 shown in the figures, the lifting shaft 240 ascends helically. The guiding groove 420 has a distal portion 440 corresponding to the end of the ascending stroke of the lifting shaft 240, which is also the start point of the descending stroke. In the figures, the distal portion 440 is located at the lowest end of the guiding groove 420, and is formed by the helical groove 422. When the guiding protrusion 352 enters the distal portion 440 of the guiding groove 420, the lifting shaft 240 reaches the end of its ascending stroke and cannot continue to ascend.

As shown in FIG. 4B, the helical groove 422 of the guiding groove 420 includes a first helical groove wall 460 and a second helical groove wall 470 facing each other. The first helical groove wall 460 is upstream of the second helical groove wall 470 in the first rotation direction R1. The first helical groove wall 460 includes a guiding wall section 462 and a limiting surface for first rotation direction 461. The limiting surface for first rotation direction 461 is provided at the distal portion 440 of the guiding groove 420. The limiting surface for first rotation direction 461 may be configured to extend along the axial direction of the lifting shaft 240. The limiting surface for first rotation direction 461 may alternatively be configured to extend at an angle less than the inclination angle (helix angle) of the guiding wall section 462. That is, the included angle between the tangent line of the limiting surface for first rotation direction 461 and the axis of the lifting shaft 240 is less than the included angle between the tangent line of the guiding wall section 462 and the axis of the lifting shaft 240, which makes the limiting surface for first rotation direction 461 steeper than the guiding wall section 462.

As shown in FIG. 4C, an outer surface of the guiding section 242 is also provided with a limiting groove 450. The limiting groove 450 is positioned on the guiding section 242 such that when the guiding protrusion 352 on the housing 233 moves into the distal portion 440 in the guiding groove 420, the limiting protrusion 355 on the housing 233 at least partially enters the limiting groove 450. The limiting groove 450 includes an additional limiting surface for first rotation direction 451 and a limiting surface for second rotation direction 452. The additional limiting surface for first rotation direction 451 and the limiting surface for second rotation direction 452 face each other, and form two walls of the limiting groove 450. The additional limiting surface for first rotation direction 451 and the limiting surface for second rotation direction 452 may be configured to extend along the axial direction of the lifting shaft 240. The additional limiting surface for first rotation direction 451 and the limiting surface for second rotation direction 452 may alternatively be configured to extend at an angle less than the inclination angle (helix angle) of the guiding wall section 462, but the inclination angles of the additional limiting surface for first rotation direction 451 and the limiting surface for second rotation direction 452 are different. In addition, the limiting groove 450 may have a length in the axial direction of the lifting shaft 240 so that the limiting protrusion 355 can travel a distance in the limiting groove 450 after entering the limiting groove 450.

When the guiding protrusion 352 moves into the distal portion 440 in the guiding groove 420, at least one of the limiting surface for first rotation direction 461 and the additional limiting surface for first rotation direction 451, together with the limiting surface for second rotation direction 452, limit the rotational movement of the lifting shaft 240 relative to the housing 233. That is, when the guiding protrusion 352 moves into the distal portion 440 in the guiding groove 420, the rotation of the lifting shaft 240 relative to the housing 233 in the first rotation direction R1 is limited by at least one of the limiting surface for first rotation direction 461 and the additional limiting surface for first rotation direction 451, and the rotation of the lifting shaft 240 relative to the housing 233 in the second rotation direction R2 is limited by the limiting surface for second rotation direction 452. The rotation of the lifting shaft 240 relative to the housing 233 in the first rotation direction R1 is limited by bringing the limiting surface for first rotation direction 461 into contact with the guiding protrusion 352 or/and the additional limiting surface for first rotation direction 451 into contact with the limiting protrusion 355. The rotation of the lifting shaft 240 relative to the housing 233 in the second rotation direction R2 is limited by bringing the limiting surface for second rotation direction 452 into contact with the limiting protrusion 355. In some embodiments, the rotational movement of the lifting shaft 240 relative to the housing 233 is limited by the limiting surface for first rotation direction 461 and the limiting surface for second rotation direction 452 without the additional limiting surface for first rotation direction 451 being involved in the operation.

As shown in FIGS. 4B and 4C, the guiding section 242 is also provided with an clearance area 430. The clearance area 430 is communicated with the limiting groove 450 and can receive the limiting protrusion 355 to allow the limiting protrusion 355 to enter the limiting groove 450 as the lifting shaft 240 ascends. The presence of the clearance area 430 makes the limiting protrusion 355 not interfere with the guiding section 242 of the lifting shaft 240. The clearance area is formed by cutting off a portion of the guiding section 242 that is otherwise positioned a movement trajectory of the limiting protrusion 355. In the embodiment shown in the figures, the clearance area 430 is configured to enclose the movement trajectory of the limiting protrusion 355 on the guiding section 242. The clearance area 430 includes an upstream boundary 431 and a downstream boundary 432 facing each other. The upstream boundary 431 is upstream of the downstream boundary 432 in the first rotation direction R1. The downstream boundary 432 extends continuously with the limiting surface for second rotation direction 452 at the same inclination angle with respect to the axis of the lifting shaft 240. Therefore, the downstream boundary 432 may act as a limiting guiding surface for guiding the limiting protrusion 355 into the limiting groove 450. In the embodiment shown in the figures, the downstream boundary 432 extends continuously with the limiting surface for second rotation direction 452 along the axial direction.

FIGS. 5A to 5E-2 show the positional relationship of the guiding protrusion 352 and the limiting protrusion 355 on the housing 233 of the actuator 120 with respect to the guiding groove 420 and the limiting groove 450 on the guiding section 242 of the lifting shaft 240 during movement of the refueling or charging port cover 110 from a closed state to an open state.

FIG. 5A is a perspective view of the actuator 120 with the refueling or charging port cover 110 closed, where the housing 233 is not shown, but the guiding protrusion 352 and the limiting protrusion 355 provided on the housing 233 are shown. As shown in FIG. 5A, when the refueling or charging port cover 110 is closed, the guiding protrusion 352 on the housing 233 is located in the top end of the straight groove 421 of the guiding groove 420, and the limiting protrusion 355 has not yet entered the guiding section 242 of the lifting shaft 240.

Driven by the driving device 210, the lifting shaft 240 begins to ascend to open the refueling or charging port cover 110. Since the guiding protrusion 352 is located in the straight groove 421 of the guiding groove 420 and the housing 233 provided with the guiding protrusion 352 remains stationary, the lifting shaft 240 ascends linearly until the state shown in FIG. 5B is reached. In the state shown in FIG. 5B, the guiding protrusion 352 reaches the bottom end of the straight groove 421, and is about to enter the helical groove 422, and the limiting protrusion 355 begins to enter the clearance area 430 on the guiding section 242.

Subsequently, as shown in FIGS. 5C-1 and 5C-2 ( FIGS. 5C-1 and 5C-2 show two different perspectives around the lifting shaft 240 in the same state), the guiding protrusion 352 begins to slide along the helical groove 422 and the limiting protrusion 355 moves in the clearance area 430 toward the limiting groove 450. As the guiding protrusion 352 slides along the helical groove 422, the lifting shaft 240 ascends helically. During this process, the refueling or charging port cover 110 rotates away from the position directly above the refueling or charging port.

As shown in FIGS. 5D-1 and 5D-2 (FIGS. 5D-1 and 5D-2 show two different perspectives around the axis of the lifting shaft 240 in the same state), the lifting shaft 240 continues to ascend under further drive of the driving device 210, and the guiding protrusion 352 begins to enter the distal portion 440 of the guiding groove 420 under the guidance of the downstream boundary 432 of the clearance area 430, and slide within the guiding groove 420 until the lifting shaft 240 cannot continue to ascend, reaching the state shown by FIGS. 5E-1 and 5E-2 (FIGS. 5E-1 and 5E-2 show two different perspectives around the axis of the lifting shaft 240 in the same state) in which the refueling or charging port cover 110 is fully opened. Since the inclination angle of a portion of the first helical groove wall 460 of the helical groove 422 at the distal portion 400 (i.e., the limiting surface for first rotation direction 461) is less than that of the other portion (i.e., the guiding wall section 462), the helical groove 422 does not prevent the limiting protrusion 355 from entering the limiting groove 450.

As shown in FIGS. 5D-1 and 5D-2, and 5E-1 and 5E-2, when the guiding protrusion 352 enters the distal portion 440 of the guiding groove 420, the guiding protrusion 352 contacts the limiting surface for first rotation direction 461, and the limiting protrusion 355 contacts the limiting surface for second rotation direction 452 and the additional limiting surface for first rotation direction 451. In this way, the lifting shaft 240 cannot rotate relative to the housing 233, nor can it be shaken relative to the housing 233.

FIGS. 6A and 6B show the overall structure of an actuator 600 according to another embodiment of the present disclosure. FIG. 6A is a perspective view of the actuator 600, and FIG. 6B is a perspective view of the actuator 120 with a housing removed. The actuator 600 in the embodiment shown in FIGS. 6A and 6B is substantially similar to the actuator 120 in the embodiment shown in FIGS. 2A-2C, except that the arrangement of the limiting structures on the lifting shaft and the housing is different.

In particular, the actuator 600 shown in FIGS. 6A and 6B includes a driving device 610, a transmission device 620, a lifting shaft 640, and a housing 633 for receiving the driving device 610, the transmission device 620 and the lifting shaft 640. The housing 633 is closed by a cover 631, the top end of the lifting shaft 640 extends through the cover 631 out of the housing 633, and a support 650 configured to be connected to the refueling or charging port cover 110 is provided at the top end of the lifting shaft 640. The lifting shaft 640 includes a transmission section 641 and a guiding section 642. The driving device 610, the transmission device 620, the cover 631 and the support 650 of the actuator 600 have the same structure as the driving device 210, the transmission device 220, the cover 231 and the support 250 of the actuator 120 in the embodiment shown in FIGS. 2A-2C. The lifting shaft 640 and the housing 633 of the actuator 600 are similar to the lifting shaft 240 and the housing 233 of the actuator 120 in the embodiment shown in FIGS. 2A-2C, respectively, except that the arrangement of the limiting structures thereon is different.

FIGS. 7A and 7B show the specific structure of the housing 633. FIG. 7A is an exploded view of the housing 633, and FIG. 7B is an axial cross-sectional view of the housing 633. As shown in FIGS. 7A and 7B, the housing 633 includes an outer housing portion 710 and an inner sleeve 750. The housing 633 defines a cavity 715, and the lifting shaft 640 is at least partially arranged in the cavity 715. A portion of the cavity 715 is defined by the inner sleeve 750 and the other portion thereof is defined by the outer housing portion 710. An inner surface of the inner sleeve 750 is provided with a guiding protrusion 752. The guiding protrusion 752 protrudes from the inner surface of the inner sleeve 750 and extends into the cavity 715. The guiding protrusion 352 has a generally circular outer contour. In the embodiment shown in the figures, there are three guiding protrusions 752. The three guiding protrusions 752 are uniformly arranged in the circumferential direction and are at the same height in the axial direction of the lifting shaft 640.

FIGS. 8A and 8B respectively show the specific structure of the guiding section 642 of the lifting shaft 640 as viewed from two different perspectives around the lifting shaft 640. As shown in FIGS. 8A and 8B, the guiding section 642 is substantially cylindrical and has a guiding groove 820 on its outer surface. The guiding groove 820 is configured to cooperate with the guiding protrusion 752 on the housing 633 to guide the lifting shaft 640 to move linearly or helically under the action of the driving device 610. In the embodiment shown in the figures, there are three guiding grooves 820. The three guiding grooves 820 are uniformly arranged around the axial direction of the lifting shaft 640.

The guiding groove 820 includes a straight groove 821 extending along the axial direction of the lifting shaft 640, and a helical groove 822 extending around the axis of the lifting shaft 640. The straight groove 821 is located at an upper portion of the guiding groove 820, and the helical groove 822 is located at a lower portion of the guiding groove 820. The straight groove is communicated with the helical groove. The guiding protrusion 752 on the housing 633 can be inserted into the guiding groove 820, and slide or move along the guiding groove 820. The guiding groove 820 has a distal portion 840 corresponding to the end of the ascending stroke of the lifting shaft 640, i.e. the beginning of the descending stroke. In the figures, the distal portion 840 is located at the lowest end of the guiding groove 820, and is formed by the helical groove 822. When the guiding protrusion 752 enters the distal portion 440 of the guiding groove 820, the lifting shaft 640 reaches the end of its ascending stroke and cannot continue to ascend.

As still shown in FIGS. 8A and 8B, the distal portion 840 of the guiding groove 820 forms a limiting groove 850. The limiting groove 850 includes a limiting surface for first rotation direction 851 and a limiting surface for second rotation direction 852 facing each other. The limiting surface for first rotation direction 851 and the limiting surface for second rotation direction 852 form two walls of the limiting groove 850. When the guiding protrusion 352 moves into the limiting groove 850, the limiting surface for first rotation direction 851 and the limiting surface for second rotation direction 852 contact the guiding protrusion 752, thereby limiting the rotational movement of the lifting shaft 640 relative to the housing 633. In addition, as an embodiment, the limiting groove 850 may have an extended length in the axial direction of the lifting shaft 640 so that the guiding protrusion 752 can travel a distance in the limiting groove 850 after entering the limiting groove 850.

The helical groove 822 of the guiding groove 820 includes a first helical groove wall 860 and a second helical groove wall 870 facing each other. The first helical groove wall 860 is upstream of the second helical groove wall 870 in the first rotation direction R1. The first helical groove wall 860 includes a guiding wall section 862 and the limiting surface for first rotation direction 851.

The limiting surface for first rotation direction 851 and the limiting surface for second rotation direction 852 may be configured to extend along the axial direction of the lifting shaft 640. The limiting surface for first rotation direction 851 and the limiting surface for second rotation direction 852 may alternatively be configured to extend gradually toward each other in the descending direction of the lifting shaft 640, such that the limiting surface for first rotation direction 851 and the limiting surface for second rotation direction 852 form a passage having a width gradually decreasing in the descending direction of the lifting shaft 640, and the width of the lowermost end of the passage is less than the maximum width of the guiding protrusion 752, so as to prevent the guiding protrusion 752 from escaping from the lower end of the guiding groove 820. In the embodiment shown in the figures, the limiting surface for first rotation direction 851 and the limiting surface for second rotation direction 852 are configured to extend gradually toward each other in the descending direction of the lifting shaft 640, and the limiting surface for first rotation direction 851 is configured to extend at an angle less than the inclination angle (helix angle) of the guiding wall section 862.

FIGS. 9A-9C show the positional relationship of the guiding protrusion 752 on the housing 633 of the actuator 600 with respect to the guiding groove 820 and the limiting groove 850 on the guiding section 642 of the lifting shaft 640 during movement of the refueling or charging port cover 110 from a closed state to an open state.

FIG. 9A is a perspective view of the actuator 600 with the refueling or charging port cover 110 closed, wherein the housing 633 is not shown, but the guiding protrusion 752 provided on the housing 633 is shown. As shown in FIG. 9A, when the refueling or charging port cover 110 is closed, the three guiding protrusions 752 on the housing 633 are located in the top ends of the straight grooves 821 of the three guiding grooves 820 of the lifting shaft 640, respectively.

Driven by the driving device 610, the lifting shaft 640 begins to move to open the refueling or charging port cover 110. Since the guiding protrusion 752 is located in the straight groove 821 of the guiding groove 820 and the housing 633 provided with the guiding protrusion 752 remains stationary, the lifting shaft 640 ascends linearly.

Subsequently, as shown in FIG. 9B, the guiding protrusion 752 enters the helical groove 822 and moves along the helical groove 822 toward the limiting groove 850. As the guiding protrusion 352 slides along the helical groove 422, the lifting shaft 640 ascends helically. During this process, the refueling or charging port cover 110 rotates away from the position directly above the refueling or charging port.

Further driven by the driving device 610, as shown in FIG. 9C, the guiding protrusion 752 enters the distal portion 840 (i.e., the limiting groove 850) of the guiding groove 820, and opposite sides of the guiding protrusion 752 contact the limiting surface for first rotation direction 851 and the limiting surface for second rotation direction 852, respectively. Therefore, the lifting shaft 640 cannot rotate or shake relative to the housing 633.

When the refueling or charging port cover of the vehicle is in the open position, the refueling or charging port cover is subjected to an external force unintentionally exerted by the operator as the operator performs the refueling or charging operation near the refueling or charging port cover. Since the actuator of the present disclosure is provided with a limiting structure which limits the rotation and shaking of the lifting shaft with respect to the housing after the lifting shaft enters the end of the ascending stroke, the limiting structure can provide a holding force to the refueling or charging port cover when the refueling or charging port cover is in the open position, making the refueling or charging port cover less susceptible to shaking.

Furthermore, since the actuator of the present disclosure is provided with a limiting structure which limits the rotation and shaking of the lifting shaft with respect to the housing after the lifting shaft enters the end of the ascending stroke, when the refueling or charging port cover is opened to the maximum position, the actuator of the present disclosure can prevent the refueling or charging port cover from shaking caused by the impact generated by the sudden stop of the driving device; and when the driving device performs the operation of closing the refueling or charging port cover, the actuator of the present disclosure can prevent the refueling or charging port cover from shaking due to gear shifting in the driving device and the transmission device.

The embodiment shown in FIGS. 2A to 5E-2 of the present disclosure is particularly suitable for use in applications where the transmission section of the lifting shaft is molded from a plastic material, because there is no sprue closing at bottom end of the guiding groove so that the demolding can be easily performed. The embodiment shown in FIGS. 6A to 9C of the present disclosure is particularly suitable for use in applications where the transmission section of the lifting shaft is formed by machining a metal material.

It should be noted that although in the embodiments shown in the figures, the housing consists of two parts, namely the outer housing portion and the inner sleeve, in other embodiments, the housing may not include the inner sleeve, and the guiding protrusion and the limiting protrusion are provided directly on the outer housing portion. This also falls within the scope of protection of the present disclosure.

Although the present disclosure is described in conjunction with the examples of embodiments outlined above, various alternatives, modifications, variations, improvements, and/or substantial equivalents that are known or current or to be anticipated before long may be obvious to those of at least ordinary skill in the art. In addition, the technical effects and/or technical problems described in this specification are exemplary rather than limiting; therefore, the disclosure in this specification may be used to solve other technical problems and may have other technical effects. Accordingly, the examples of the embodiments of the present disclosure as set forth above are intended to be illustrative rather than limiting. Various changes can be made without departing from the spirit or scope of the present disclosure. Therefore, the present disclosure is intended to include all known or earlier developed alternatives, modifications, variations, improvements and/or basic equivalents.

Certain embodiments of the invention are described in the following clauses:
Clause 1. An actuator for a refueling or charging port cover, comprising:
   a housing defining a cavity;
   a lifting shaft being at least partially arranged in the cavity and configured to ascend and descend relative to the housing to open and close the refueling or charging port cover, the lifting shaft comprising a guiding section, the guiding section being provided with a guiding groove and a limiting groove, the guiding groove having a distal portion corresponding to the end of the ascending stroke of the lifting shaft;
   a guiding protrusion provided on the housing and configured to cooperate with the guiding groove to guide the lifting shaft to move linearly along an axis or move helically around the axis, these movements being driven by a driving device, wherein when the lifting shaft moves helically along a first rotation direction, the lifting shaft descends, and when the lifting shaft moves helically in a second rotation direction opposite to the first rotation direction, the lifting shaft ascends; and
   a limiting protrusion provided on the housing, wherein when the guiding protrusion moves to the distal portion in the guiding groove, the limiting protrusion at least partially enters the limiting groove;
   wherein the guiding groove is provided with a limiting surface for first rotation direction at the distal portion, and the limiting groove comprises a additional limiting surface for first rotation direction and a limiting surface for second rotation direction; and
   wherein when the guiding protrusion moves to the distal portion in the guiding groove, at least one of the limiting surface for first rotation direction and the additional limiting surface for first rotation direction, together with the limiting surface for second rotation direction, limits the rotation of the lifting shaft relative to the housing.
Clause 2. The actuator of clause 1, wherein
   when the guiding protrusion moves to the distal portion in the guiding groove:
   the limiting surface for first rotation direction contacts the guiding protrusion, and the limiting surface for second rotation direction contacts the limiting protrusion; or
   the additional limiting surface for first rotation direction and the limiting surface for second rotation direction contact the limiting protrusion; or
   the limiting surface for first rotation direction contacts the guiding protrusion, and the additional limiting surface for first rotation direction and the limiting surface for second rotation direction contact the limiting protrusion.
Clause 3. The actuator of clause 1, wherein
   the guiding section is also provided with an clearance area, which is communicated with the limiting groove and can receive the limiting protrusion to allow the limiting protrusion to enter the limiting groove as the lifting shaft ascends.
Clause 4. The actuator of clause 3, wherein
   the guiding groove comprises a straight groove extending along the axial direction and a helical groove extending around the axial direction, the straight groove being communicated with the helical groove, wherein the helical groove forms the distal portion.
Clause 5. The actuator of clause 4, wherein
   the helical groove comprises a first helical groove wall and a second helical groove wall facing each other, the first helical groove wall being upstream of the second helical groove wall in the first rotation direction, and the first helical groove wall comprising a guiding wall section and the limiting surface for first rotation direction.
Clause 6. The actuator of clause 5, wherein
   the limiting surface for first rotation direction, the additional limiting surface for first rotation direction, and the limiting surface for second rotation direction generally extend axially; or
   the limiting surface for first rotation direction, the additional limiting surface for first rotation direction, and the limiting surface for second rotation direction extend at an inclination angle smaller than that of the guiding wall section, and the inclination angle of the limiting surface for second rotation direction is different from the inclination angle of the limiting surface for first rotation direction and the inclination angle of the additional limiting surface for first rotation direction.
Clause 7. The actuator of clause 6, wherein
   the clearance area comprises an upstream boundary and a downstream boundary facing each other, the upstream boundary being upstream of the downstream boundary in the first rotation direction, wherein the downstream boundary extends continuously with the limiting surface for second rotation direction along the axial direction or at the same inclination angle.
Clause 8. The actuator of clause 1, wherein
   the guiding protrusion and the limiting protrusion are spaced apart by a distance in the axial direction and are spaced apart by a distance in the circumferential direction.
Clause 9. The actuator of clause 1, wherein
   the housing comprises an outer housing portion and an inner sleeve, the inner sleeve being detachably mounted within the outer housing portion and immovable with respect to the outer housing portion, the inner sleeve defining a portion of the cavity;
   wherein the guiding protrusion and the limiting protrusion are provided on the inner sleeve.
Clause 10. The actuator of clause 1, wherein
   the lifting shaft further comprises a transmission section, the transmission section being configured to helically engage with the driving device extending into the cavity to drive the lifting shaft to ascend and descend;
   wherein the distal portion of the guiding groove is configured to be remote from the transmission section.
Clause 11. The actuator of clause 1, wherein
   the guiding section is integrally molded from a plastic material over the transmission section.
Clause 12. An actuator for a refueling or charging port cover, comprising:
   a housing defining a cavity;
   a lifting shaft being at least partially arranged in the cavity and configured to ascend and descend relative to the housing to open and close the refueling or charging port cover, the lifting shaft comprising a guiding section, the guiding section is provided with at least one guiding groove, the at least one guiding groove has a distal portion corresponding to the end of the ascending stroke of the lifting shaft;
   a guiding protrusion provided on the housing and configured to engage with the guiding groove to guide the lifting shaft to move linearly along an axis or move helically around the axis, these movement being driven by a driving device, wherein when the lifting shaft moves helically along a first rotation direction, the lifting shaft descends, and when the lifting shaft moves helically in a second rotation direction opposite to the first rotation direction, the lifting shaft ascends;
   wherein the distal portion of the at least one guiding groove forms a limiting groove, and wherein when the guiding protrusion moves into the limiting groove, the limiting groove limits the rotation of the lifting shaft relative to the housing.
Clause 13. The actuator of clause 12, wherein:
   the limiting groove comprises a limiting surface for first rotation direction and a limiting surface for second rotation direction, wherein when the guiding protrusion moves into the limiting groove, the limiting surface for first rotation direction and the limiting surface for second rotation direction contact the guiding protrusion.
Clause 14. The actuator of clause 13, wherein:
   the limiting surface for first rotation direction and the limiting surface for second rotation direction extend axially, or gradually extend toward each other in the descending direction of the lifting shaft.
Clause 15. The actuator of clause 12, wherein:
   the housing comprises an outer housing and an inner sleeve, the inner sleeve being detachably mounted within the outer housing and immovable with respect to the outer housing, the inner sleeve defining a portion of the cavity;
   wherein the guiding protrusion is provided on the inner sleeve.
Clause 16. The actuator of clause 12, wherein:
   the lifting shaft further comprises a transmission section, the transmission section being configured to helically engage with a driving device extending into the cavity to drive the lifting shaft to ascend and descend;
   wherein the distal portion of the at least one guiding groove is configured to be remote from the transmission section.
Clause 17. The actuator of clause 12, wherein:
   the at least one guiding groove comprises three guiding grooves uniformly arranged along the circumferential direction.
Clause 18. A refueling or charging port cover system for vehicles, comprising:
   a refueling or charging port cover; and
   the actuator according to any one of clauses 1-17;
   wherein the refueling or charging port cover is connected to the lifting shaft of the actuator, and is opened and closed by ascending and descending of the lifting shaft relative to the housing.

## Claims

1. An actuator for a refueling or charging port cover, comprising:
a housing defining a cavity;
a lifting shaft being at least partially arranged in the cavity and configured to ascend and descend relative to the housing to open and close the refueling or charging port cover, the lifting shaft comprising a guiding section, the guiding section being provided with a guiding groove and a limiting groove, the guiding groove having a distal portion corresponding to the end of the ascending stroke of the lifting shaft;
a guiding protrusion provided on the housing and configured to cooperate with the guiding groove to guide the lifting shaft to move linearly along an axis or move helically around the axis, these movements being driven by a driving device, wherein when the lifting shaft moves helically along a first rotation direction, the lifting shaft descends, and when the lifting shaft moves helically in a second rotation direction opposite to the first rotation direction, the lifting shaft ascends; and
a limiting protrusion provided on the housing, wherein when the guiding protrusion moves to the distal portion in the guiding groove, the limiting protrusion at least partially enters the limiting groove;
wherein the guiding groove is provided with a limiting surface for first rotation direction at the distal portion, and the limiting groove comprises a additional limiting surface for first rotation direction and a limiting surface for second rotation direction; and
wherein when the guiding protrusion moves to the distal portion in the guiding groove, at least one of the limiting surface for first rotation direction and the additional limiting surface for first rotation direction, together with the limiting surface for second rotation direction, limits the rotation of the lifting shaft relative to the housing.

2. The actuator of claim 1, wherein
when the guiding protrusion moves to the distal portion in the guiding groove:
the limiting surface for first rotation direction contacts the guiding protrusion, and the limiting surface for second rotation direction contacts the limiting protrusion; or
the additional limiting surface for first rotation direction and the limiting surface for second rotation direction contact the limiting protrusion; or
the limiting surface for first rotation direction contacts the guiding protrusion, and the additional limiting surface for first rotation direction and the limiting surface for second rotation direction contact the limiting protrusion.

3. The actuator of claim 1, wherein
the guiding section is also provided with an clearance area, which is communicated with the limiting groove and can receive the limiting protrusion to allow the limiting protrusion to enter the limiting groove as the lifting shaft ascends.

4. The actuator of claim 3, wherein
the guiding groove comprises a straight groove extending along the axial direction and a helical groove extending around the axial direction, the straight groove being communicated with the helical groove, wherein the helical groove forms the distal portion.

5. The actuator of claim 4, wherein
the helical groove comprises a first helical groove wall and a second helical groove wall facing each other, the first helical groove wall being upstream of the second helical groove wall in the first rotation direction, and the first helical groove wall comprising a guiding wall section and the limiting surface for first rotation direction.

6. The actuator of claim 5, wherein
the limiting surface for first rotation direction, the additional limiting surface for first rotation direction, and the limiting surface for second rotation direction generally extend axially; or
the limiting surface for first rotation direction, the additional limiting surface for first rotation direction, and the limiting surface for second rotation direction extend at an inclination angle smaller than that of the guiding wall section, and the inclination angle of the limiting surface for second rotation direction is different from the inclination angle of the limiting surface for first rotation direction and the inclination angle of the additional limiting surface for first rotation direction.

7. The actuator of claim 6, wherein
the clearance area comprises an upstream boundary and a downstream boundary facing each other, the upstream boundary being upstream of the downstream boundary in the first rotation direction, wherein the downstream boundary extends continuously with the limiting surface for second rotation direction along the axial direction or at the same inclination angle.

8. The actuator of claim 1, wherein
the guiding protrusion and the limiting protrusion are spaced apart by a distance in the axial direction and are spaced apart by a distance in the circumferential direction, or
wherein
the housing comprises an outer housing portion and an inner sleeve, the inner sleeve being detachably mounted within the outer housing portion and immovable with respect to the outer housing portion, the inner sleeve defining a portion of the cavity;
wherein the guiding protrusion and the limiting protrusion are provided on the inner sleeve.

9. The actuator of claim 1, wherein
the lifting shaft further comprises a transmission section, the transmission section being configured to helically engage with the driving device extending into the cavity to drive the lifting shaft to ascend and descend;
wherein the distal portion of the guiding groove is configured to be remote from the transmission section.

10. The actuator of claim 1, wherein
the guiding section is integrally molded from a plastic material over the transmission section.

11. An actuator for a refueling or charging port cover, comprising:
a housing defining a cavity;
a lifting shaft being at least partially arranged in the cavity and configured to ascend and descend relative to the housing to open and close the refueling or charging port cover, the lifting shaft comprising a guiding section, the guiding section is provided with at least one guiding groove, the at least one guiding groove has a distal portion corresponding to the end of the ascending stroke of the lifting shaft;
a guiding protrusion provided on the housing and configured to engage with the guiding groove to guide the lifting shaft to move linearly along an axis or move helically around the axis, these movement being driven by a driving device, wherein when the lifting shaft moves helically along a first rotation direction, the lifting shaft descends, and when the lifting shaft moves helically in a second rotation direction opposite to the first rotation direction, the lifting shaft ascends;
wherein the distal portion of the at least one guiding groove forms a limiting groove, and wherein when the guiding protrusion moves into the limiting groove, the limiting groove limits the rotation of the lifting shaft relative to the housing.

12. The actuator of claim 11, wherein:
the limiting groove comprises a limiting surface for first rotation direction and a limiting surface for second rotation direction, wherein when the guiding protrusion moves into the limiting groove, the limiting surface for first rotation direction and the limiting surface for second rotation direction contact the guiding protrusion, and optionally
wherein:
the limiting surface for first rotation direction and the limiting surface for second rotation direction extend axially, or gradually extend toward each other in the descending direction of the lifting shaft.

13. The actuator of claim 11, wherein:
the housing comprises an outer housing and an inner sleeve, the inner sleeve being detachably mounted within the outer housing and immovable with respect to the outer housing, the inner sleeve defining a portion of the cavity;
wherein the guiding protrusion is provided on the inner sleeve, or
wherein:
the lifting shaft further comprises a transmission section, the transmission section being configured to helically engage with a driving device extending into the cavity to drive the lifting shaft to ascend and descend;
wherein the distal portion of the at least one guiding groove is configured to be remote from the transmission section.

14. The actuator of claim 11, wherein:
the at least one guiding groove comprises three guiding grooves uniformly arranged along the circumferential direction.

15. A refueling or charging port cover system for vehicles, comprising:
a refueling or charging port cover; and
the actuator according to any one of claims 1-14;
wherein the refueling or charging port cover is connected to the lifting shaft of the actuator, and is opened and closed by ascending and descending of the lifting shaft relative to the housing.
